# EUROPEAN PATENT APPLICATION

(11) **EP 1 980 764 A1**
(43) Date of publication of application: **15.10.2008**
(21) Application number: 06712912.2
(22) Date of filing: 02.02.2006
(51) Int. Cl.: F16C 29/12

(54) **MOVEMENT DEVICE**

(71) Applicant: Yugen Kaisha Hama International, Okaya-shi Nagano 394-0034 (JP)
(72) Inventor: HAMA, Tomio, Okaya-shi, Nagano 394-0034 (JP)
(74) Representative: Gill, Stephen Charles
(86) International application number: PCT/JP2006/301769
(87) International publication number: WO 2007/088619

(57) **Abstract**

The present invention provides a movement device using a roller unit, in which play in an axial direction of rollers is appropriately reduced, operation resistance is reduced and the rollers have less abrasion. Grooves 40 are formed in a guide face 2a of a support rail 2 and extended in the direction of guiding a moving body 4, peripheral ridges 42, which enter the grooves 40 and whose height is less than a depth of the grooves, are formed in outer circumferential faces of the rollers 6b and 7b, and the grooves 40 and the peripheral ridges 42 are constructed such that both edges 40a and 40b of each of the grooves 40 and both edges 42a and 42b of each of the peripheral ridges 42 are in contact with each other and that an angle θ1 formed by the guide face 2a and an inner side face 40c of the groove 40 is set smaller than an angle θ2 formed by the guide face 2a and an outer side face 42c of the peripheral edge 42 in the contacting edges of the groove 40 and the peripheral edge 42 so as not to bring the outer side face 42c of the peripheral edge 42 into contact with the inner side face 40c of the groove 40.

## Description

### FIELD OF TECHNOLOGY

The present invention relates to a movement device, which has a moving body capable of moving along a support rail and a roller unit contacting the support rail.

### BACKGROUND TECHNOLOGY

For example, a conventional movement device, in which roller units (guide rollers) are provided between a moving body (guide carriage) and a support rail (guide rail), is disclosed in Patent Document 1 (see paragraphs 0037 and 0074 and Fig. 1 of Patent Document 1). In conventional movement devices, such as the one disclosed in Patent Document 1, in which the support rail and the moving body are in contact with roller units, it was difficult to restrain axial play of the rollers of the roller units.

Thus, in the movement device disclosed in Patent Document 1, a rod having a circular cross-section is used as the support rail, and circumferential faces of the rollers are formed into semicircular grooves corresponding to the outer circumferential face of the circular rod (see paragraph 0037 and Fig. 1 of Patent Document 1). With this structure, the axial play of the rollers can be reduced and restrained.

Patent Document 1: JP7-54843 (paragraphs 0037 and 0074 and Fig. 1)

### DISCLOSURE OF THE INVENTION

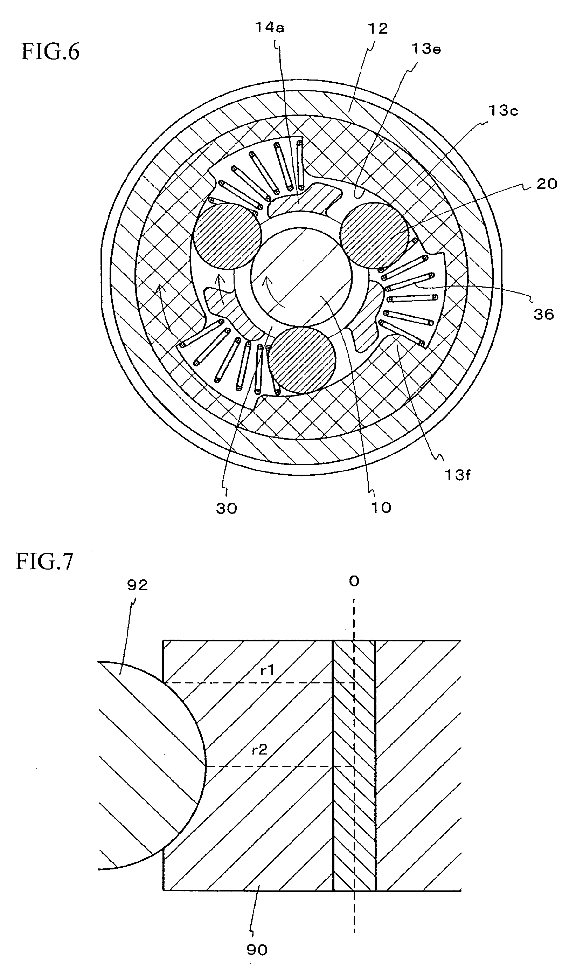

However, in the movement device disclosed in Patent Document 1, by forming the outer circumferential faces of the rollers of the roller units into the semicircular grooves corresponding to the outer circumferential face of the circular rod, as shown in Fig. 7, distances (radiuses) r1 and r2 from positions on the roller 90 to a rotational axis O of the roller 90 are different. Therefore, when the roller 90 is rotated at a prescribed angular speed by linear movement of a moving body, circumferential velocities at positions in the circumferential face of the roller 90 are different, so relative speeds of the positions with respective to the support rail (circular rod) 92 are different. Thus, some positions in the circumferential face of the roller 90 will slip on the support rail (circular rod) 92, operation resistance will be increased and excessive abrasion will be occurred in the roller 90 and the support rail 92.

The present invention was conceived to solve the above described problems, and an object of the present invention is to provide a movement device, which is capable of appropriately restraining axial play of a roller, reducing operation resistance and restraining abrasion of the roller.

To solve the above described problems, movement devices of the present invention have following structures. Namely, the movement device comprises: a support rail being fixed to a base body; a moving body being capable of moving along the support rail; a roller unit having a roller contacting and rolling on a guide face of the support rail; and a preload device being provided to the moving body, the preload device always pressing the roller unit toward the support rail with a prescribed force, a groove is formed in the guide face of the support rail and extended in a moving direction of the moving body, a peripheral ridge, which enters the groove and whose height is less than a depth of the groove, is formed in an outer circumferential face of the roller, and the groove and the peripheral ridge are constructed such that both edges of the groove and both edges of the peripheral ridge are in contact with each other, and an angle formed by the guide face and an inner side face of the groove is set smaller than an angle formed by the guide face and an outer side face of the peripheral edge in the contacting edges of the groove and the peripheral edge so as not to bring the outer side face of the peripheral edge into contact with the inner side face of the groove.

With this structure, the edges of the groove of the support rail and the peripheral ridge of the roller mutually contact, and the outer side faces of the peripheral edge are not in contact with the inner side faces of the groove. Therefore, the support rail and the roller mutually contact at the edges of the groove and the peripheral ridge, and the guide face of the support rail and the outer circumferential face of the roller mutually contact, so that distances (radiuses) from the rotational axis of are equal at all of contact positions of the roller, and slip, which will be occurred between the roller and the support rail by circumferential velocity difference, can be prevented. Further, since the edges of the groove and the peripheral ridge mutually contact, axial play of the roller can be suitably restrained.

Next, the movement device comprises: a support rail being fixed to a base body; a moving body being capable of moving along the support rail; a roller unit having a roller contacting and rolling on a guide face of the support rail; and a preload device being provided to the moving body, the preload device always pressing the roller unit toward the support rail with a prescribed force, a projected line is formed in the guide face of the support rail and extended in a moving direction of the moving body, a groove, in which the projected line enters and whose depth is more than a height of the groove, is formed in an outer circumferential face of the roller, and the groove and the projected line are constructed such that both edges of the groove and both edges of the projected line are in contact with each other, and an angle formed by the guide face and an inner side face of the groove is set smaller than an angle formed by the guide face and an outer side face of the projected line in the contacting edges of the groove and the projected line so as not to bring the outer side face of the projected line into contact with the inner side face of the groove.

With this structure, the edges of the projected line of the support rail and the groove of the roller mutually contact, and the outer side faces of the projected line are not in contact with the inner side faces of the groove. Therefore, the support rail and the roller mutually contact at the edges of the groove and the projected line, and the guide face of the support rail and the outer circumferential face of the roller mutually contact, so that distances (radiuses) from the rotational axis of are equal at all of contact positions of the roller, and slip, which will be occurred between the roller and the support rail by circumferential velocity difference, can be prevented. Further, since the edges of the groove and the projected line mutually contact, the axial play of the roller can be suitably restrained.

For example, the preload device comprises: an urging member urging the roller unit toward the support rail; and check means for prohibiting the roller unit to move away from the support rail.

With this structure, the preload device applies preload by pressing the roller unit onto the support rail by the urging force of the urging member. When a clearance is formed between the support rail and a contact body by abrasion, etc., the roller unit is moved toward the support rail by the urging force of the urging member, so that the clearance can be eliminated. On the other hand, when an external force against the urging force of the urging member is applied from the support rail to the roller unit, the reverse movement of the roller unit can be prohibited by the check means.

For example, the support rail is composed of a metal, whose main component is aluminum, and the roller is composed of plastic.

With this structure, the support rail is harder than the roller so that abrasion of the support rail can be prevented, and the roller is composed of the viscous material so that abrasion of the roller can be restrained.

The inventor of the present invention repeated experiments with changing materials of the support rail and the roller, and he found that, in case of using the support rail composed of an aluminum alloy and the roller composed of plastic, abrasion of the both members could be less than that of the both members having nearly equal hardness.

For example, the support rail is composed of a metal, whose main component is aluminum, and formed by extrusion molding.

With this structure, the support rail can be easily and inexpensively produced.

Even if the support rail is formed with a low accuracy extruding die, the clearance between the support rail and the roller unit can be eliminated by the preload device, so that play can be prevented.

Further, the movement device comprises: a roller unit being provided to a base body; a rail-shaped moving body having a guide face contacting a roller of the roller unit, the rail-shaped moving body being guided by the roller unit; and a preload device being provided to the base body, the preload device always pressing the roller unit toward the moving body with a prescribed force, a groove is formed in the guide face of the moving body and extended in a guiding direction of the roller unit, a peripheral ridge, which enters the groove and whose height is less than a depth of the groove, is formed in an outer circumferential face of the roller, and the groove and the peripheral ridge are constructed such that both edges of the groove and both edges of the peripheral ridge are in contact with each other, and an angle formed by the guide face and an inner side face of the groove is set smaller than an angle formed by the guide face and an outer side face of the peripheral edge in the contacting edges of the groove and the peripheral edge so as not to bring the outer side face of the peripheral edge into contact with the inner side face of the groove.

With this structure, the edges of the groove of the moving body and the peripheral ridge of the roller mutually contact, and the outer side faces of the peripheral edge are not in contact with the inner side faces of the groove. Therefore, the moving body and the roller mutually contact at the edges of the groove and the peripheral ridge, and the guide face of the moving body and the outer circumferential face of the roller mutually contact, so that distances (radiuses) from the rotational axis of are equal at all of contact positions of the roller, and slip, which will be occurred between the roller and the moving body by circumferential velocity difference, can be prevented. Further, since the edges of the groove and the peripheral ridge mutually contact, axial play of the roller can be suitably restrained.

Next, the movement device comprises: a roller unit being provided to a base body; a rail-shaped moving body having a guide face contacting a roller of the roller unit, the rail-shaped moving body being guided by the roller unit; and a preload device being provided to the base body, the preload device always pressing the roller unit toward the moving body with a prescribed force, a projected line is formed in the guide face of the moving body and extended in a guiding direction of the roller unit, a groove, in which the projected line enters and whose depth is more than a height of the groove, is formed in an outer circumferential face of the roller, and the groove and the projected line are constructed such that both edges of the groove and both edges of the projected line are in contact with each other, and an angle formed by the guide face and an inner side face of the groove is set smaller than an angle formed by the guide face and an outer side face of the projected line in the contacting edges of the groove and the projected line so as not to bring the outer side face of the projected line into contact with the inner side face of the groove.

With this structure, the edges of the projected line of the moving body and the groove of the roller mutually contact, and the outer side faces of the projected line are not in contact with the inner side faces of the groove. Therefore, the moving body and the roller mutually contact at the edges of the groove and the projected line, and the guide face of the moving body and the outer circumferential face of the roller mutually contact, so that distances (radiuses) from the rotational axis of are equal at all of contact positions of the roller, and slip, which will be occurred between the roller and the moving body by circumferential velocity difference, can be prevented. Further, since the edges of the groove and the projected line mutually contact, axial play of the roller can be suitably restrained.

For example, the preload device comprises: an urging member urging the roller unit toward the moving body; and check means for prohibiting the roller unit to move away from the moving body.

With this structure, the preload device applies preload by pressing the roller unit onto the moving body by the urging force of the urging member. When a clearance is formed between the moving body and a contact body by abrasion, etc., the roller unit is moved toward the moving body by the urging force of the urging member, so that the clearance can be eliminated. On the other hand, when an external force against the urging force of the urging member is applied from the moving body to the roller unit, the reverse movement of the roller unit can be prohibited by the check means.

For example, the moving body is composed of a metal, whose main component is aluminum, and the roller is composed of plastic.

With this structure, the moving body is harder than the roller so that abrasion of the moving body can be prevented, and the roller is composed of the viscous material so that abrasion of the roller can be restrained.

The inventor of the present invention repeated experiments with changing materials of the moving body and the roller, and he found that, in case of using the moving body composed of an aluminum alloy and the roller composed of plastic, abrasion of the both members could be less than that of the both members having nearly equal hardness.

For example, the moving body is composed of a metal, whose main component is aluminum, and formed by extrusion molding.

With this structure, the moving body can be easily and inexpensively produced.

Even if the moving body is formed with a low accuracy extruding die, the clearance between the moving body and the roller unit can be eliminated by the preload device, so that play can be prevented.

### EFFECTS OF THE INVENTION

In the movement device of the present invention, the axial play of the roller can be restrained, operation resistance can be reduced and abrasion of the roller can be restrained.

### BRIEF DESCRIPTION OF THE DRAWINGS

Fig. 1 is a perspective view of a transfer apparatus A, which is used for taking out resin-molded products and in which the movement devices of the present invention are installed.
Fig. 2 is a partial enlarged view of the transfer apparatus A.
Fig. 3 is an enlarged view of a contact section of a support rail and a roller.
Figs. 4A and 4B are perspective views of a preload device.
Fig. 5 is a side sectional view of the preload device and a contact body.
Fig. 6 is a sectional view of the preload device taken along a line X-X.
Fig. 7 is an enlarged view of a contact section of the support rail and the roller of the conventional movement device.

### OPTIMUM EMBODIMENTS OF THE INVENTION

Optimum embodiments of the present invention will now be described in detail with reference to the accompanying drawings.

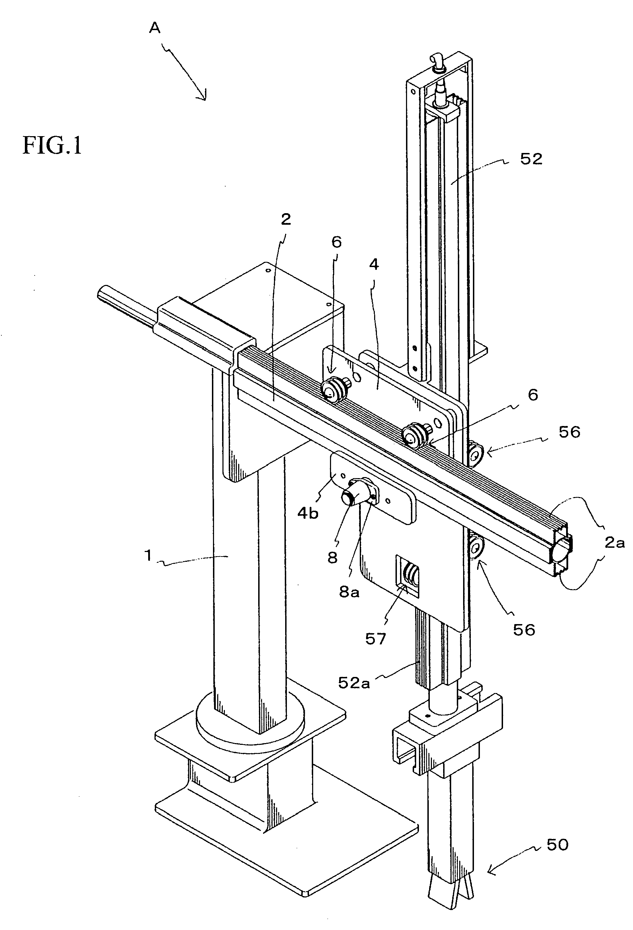

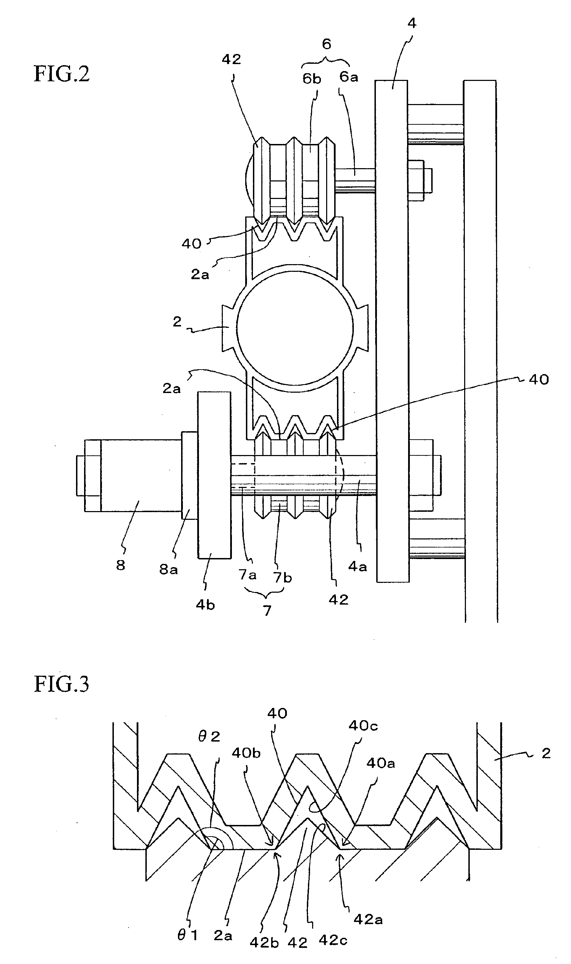

Fig. 1 is a perspective view of a transfer apparatus A, which is used for taking out resin-molded products and in which movement devices of the present embodiment are installed. Fig. 2 is a partial enlarged view of the transfer apparatus A, wherein a horizontal movement device (described later) are seen from a longitudinal end of a horizontal support rail (described later).

The transfer apparatus A comprises: a base body 1; a chucking section 50, which is opened and closed so as to clamp and release a resin-molded product; a horizontal movement device for reciprocally moving the chucking section 50 in the horizontal direction; and a vertical movement device for reciprocally moving the same in the vertical direction.

### (Horizontal Movement Device)

The horizontal movement device comprises: the horizontal support rail 2 being horizontally attached to the base body 1; a horizontal moving body 4 being capable of horizontally moving along the horizontal support rail 2; roller units 6 and 7 (see Fig. 2), which respectively have rollers 6b and 7b contacting and rolling on upper and lower guide faces 2a of the horizontal support rail 2; and a preload device 8 being provided to the horizontal moving body 4 and acting as preloading means, which always presses the roller unit 7 onto the horizontal support rail 2 with a prescribed force.

The horizontal rail 2 is composed of aluminum alloy and formed by extrusion molding.

As shown in Fig. 2, the roller units 6 and 7 respectively include: base members 6a and 7a being fixed to the horizontal moving body 4; and the rollers 6b and 7b, which can be rotated with respect to the base members 6a and 7a and contact the guide faces 2a of the horizontal support rail 2. The rollers 6b and 7b are composed of plastic and include ball bearings for smooth rotation.

Two roller units 6 are arranged in the axial direction of the support rail 2; the roller unit 7 is located at a mid position between the roller units 6 and on the opposite side with respect to the support rail 2.

As shown in Fig. 2, the preload device 8 is fixed to a plate member 4b, which is fixed to the horizontal moving body 4 by a rod 4a. The preload device 8 has a roller unit 7. The preload device 8 is penetrated through an opening section of the plate member 4b and fixed to the plate member 4b by a mounting section 8a which constitutes mounting means.

### (Vertical Movement Device)

A vertical movement device is attached to the horizontal moving body 4. Namely, the horizontal moving body 4 acts as a base body of the vertical movement device.

In the vertical movement device, a rail-shaped member 52, whose shape is similar to that of the horizontal support rail 2, can be moved in the vertical direction. Namely, the structure of the vertical movement device is similar to that of the horizontal movement device, but in the vertical movement device, the structural relationship between a member fixed to the base body and a moving member (moving body) is opposite to that of the horizontal movement device.

The vertical movement device comprises: roller units 56 and 57, which have rollers and which are provided to the horizontal moving body 4 acting as the base body; the rail-shaped member 52, which has guide faces 52a contacting the rollers and whose movement is guided by the roller units 56 and 57; and preload units, not shown, being provided to the horizontal moving body 4 and always pressing the roller units 56 and 57 toward the rail-shaped member 52 with a prescribed force.

In the vertical movement device, the roller units 56 and 57 are provided on the horizontal moving body 4 acting as the base body, and the rail-shaped member 52 is guided by the roller units 56 and 57 so as to move in the vertical direction with respect to the horizontal moving body 4.

The structural relationship between the member fixed to the base body and the moving member (moving body) in the vertical movement device is opposite to that in the horizontal movement device, but other structures are the same as those of the horizontal movement device, so only the structures of the horizontal movement device will be explained in the following description.

### (Grooves and Peripheral Ridges)

Next, grooves formed in the horizontal support rail 2 and peripheral ridges formed in the rollers 6b and 7b of the roller units 6 and 7, which are characteristic points of the present invention, will be explained with reference to Fig. 3. Fig. 3 is an enlarged view of a contact section of the support rail 2 and the roller 7b (or 6b).

A plurality of grooves 40 is formed in the guide faces 2a of the horizontal support rail 2 and extended in the direction of guiding the horizontal moving body 4. On the other hand, a plurality of circular peripheral ridges 42, which can enter the grooves 40 and whose height is less than a depth of the grooves 40, are formed in an outer circumferential face of the roller 7b.

The grooves 40 and the peripheral ridges 42 have the same width, so that both edges 40a and 40b of each groove 40 and both edges 42a and 42b of each peripheral ridge 42 are in contact with each other.

In SPECIFICATION and CLAIMS of the present application, the edges 40a and 40b of the groove 40 are base edges of the groove 40 from which inner side faces of the groove start to extend; the edges 42a and 42b of the peripheral ridge 42 are base edges from which outer side faces of the peripheral ridge start to extend.

Each of the grooves 40 and each of the peripheral ridges 42 are constructed such that an angle θ1 formed by the guide face 2a and an inner side face 40c of the groove 40 is set smaller than an angle θ2 formed by the guide face 2a and an outer side face 42c of the peripheral edge 42 in the contacting edges 40a, 40b, 42a and 42b of the groove 40 and the peripheral edge 42 so as not to bring the outer side face 42c of the peripheral edge 42 into contact with the inner side face 40c of the groove 40. A distance between the outer side faces 42c of the tapered peripheral ridge 42 is less than that between the inner side faces 40c of the groove 40, so that the outer side faces 42c of the peripheral ridge 42 are not in contact with the inner side faces 40c of the groove 40.

Note that, in the present embodiment, the side faces of the grooves 40 and the peripheral ridges 42 are flat faces, but the present invention is not limited to the above embodiment.

The essential structures of the groove and the peripheral ridge are as follows: the both edges of the groove and the both edges of the peripheral ridge are in contact with each other; and the angle formed by the guide face 2a and the inner side face of the groove is set smaller than the angle formed by the guide face 2a and the outer side face of the peripheral edge so as not to bring the outer side faces of the peripheral edge into contact with the inner side faces of the groove.

For example, the groove or the peripheral ridge may have a circular cross-section.

### (Preload Device)

Successively, details of the preload device 8 will be explained.

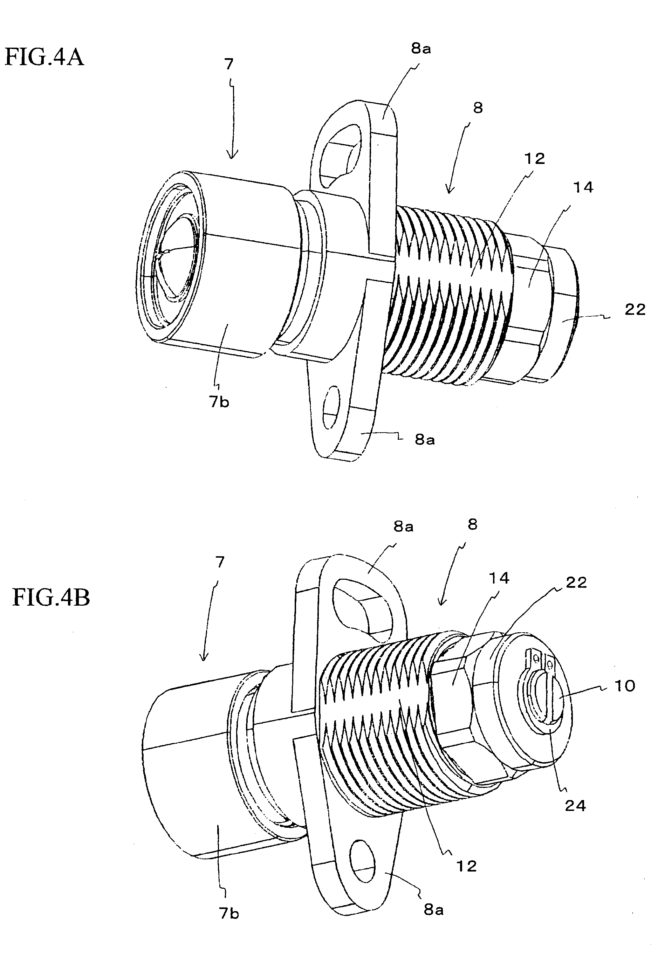

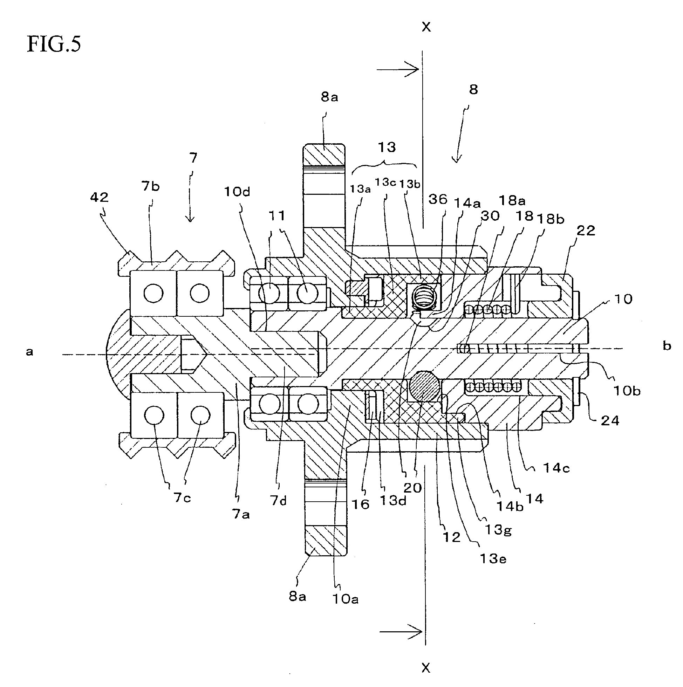

Figs. 4A and 4B are perspective views of the preload device 8 and the roller unit 7 attached to the preload device 8; Fig. 5 is a side sectional view thereof; and Fig. 6 is a sectional view taken along a line X-X (note that, a circular projection 42 is not shown in Fig. 4).

As shown in Figs. 4A, 4B and 5, the preload device 8 comprises: the mounting section 8a being used for attaching the preload device 8 to the horizontal moving body 4; a main body 12 having a cylindrical form and being fixed to the mounting section 8a; a rod 10 being coaxially inserted into the main body 12 and capable of rotating with respect to the main body 12, as a rotation body, with a bearing 11; a flange member 13 acting as a facing section and being coaxially provided in the main body 12, wherein the rod 10 is inserted therein; a releasing member 14 being capable of independently and relatively rotating with respect to the rod 10; a spiral spring 18 acting as a first urging member for urging the rod 10 to rotate in a prescribed direction with respect to the main body 12 (the horizontal moving body 4), wherein one end 18a of the spiral spring is connected to the releasing member 14 and the other end 18b is connected to the rod 10; and three spherical members 20, 20 and 20 being provided between the main body 12 and the rod 10 and contacting the both.

As shown in Fig. 5, the roller unit 7 comprises: a base section 7a being fixed to the rod 10 of the preload device 8; and a roller 7b being capable of rotating, with respect to the base section 7a, with a bearing 7c, the roller contacting an inner ceiling face of the U-shaped part 2a of the horizontal support rail 2.

A bolt 7d, which is extended along a rotational axis a of the roller 7b, is screwed with a female screw 10d, which is formed in one end part of the rod 10, so that the roller unit 7 can be attached to the rod 10. The roller unit 7 is attached to the rod 10 with displacing the rotational axis a from a rotational axis b of the rod 10 (i.e., the axial line of the rod 10). With this structure, the roller unit 7 is rotated about the rotational axis b, which is displaced from the rotational axis a, by rotating the rod 10, so that the roller unit 7 is moved upward and pressed onto the guide face 2a of the horizontal support rail 2.

An outer circumferential part of the main body 12 is fixed to the mounting section 8a. By fixing the mounting section 8a to a leg part 4a of the horizontal moving body 4, the main body 12 too is fixed to the horizontal moving body 4.

The bearing 11 is provided between the main body 12 and the rod 10, so that the rod 10 can be smoothly rotated in the main body 12.

The rod 10 is inserted into the flange section 13, which is capable of independently and relatively rotating with respect to the main body 12 and the rod 10.

One end side of the flange member 13 is formed into a small diameter part 13a extended along the rod 10; the other end part is formed into a hollow large diameter part 13b, whose outer circumferential face contacts the inner face of the main body 12 and whose inner circumferential face is separated from the rod 10. In the main body 12, a step section 10a, which is inwardly extended, is formed along a step section 13c, which connects the small diameter part 13a and the large diameter part 13b of the flange section 13. A ratchet claw 16 is fixed to a facing surface of the step section 10a, which faces the flange member 13. A plurality of engage portions 13d, with which the ratchet claw can be engaged, are formed in a contact face of the flange member 13 (the opposite face with respect to a hollow part in which the spherical members 20 are provided), with which the ratchet claw 16 is in contact, and the flange member 13 is allowed to rotate in only a prescribed normal direction (the clockwise direction in Fig. 6) by the ratchet mechanism (check mechanism) constituted by the ratchet claw 16 and the engage portions 13d.

The spherical members 20 are respectively provided between facing surfaces 13e of the large diameter part 13b of the flange member 13, which faces the rod 10, and the rod 10, and they contact the facing surfaces and the rod. As shown in Fig. 5, each of the facing surfaces 13e of the large diameter part 13 b of the flange member 13 is formed such that the distances between the facing surface and the outer circumferential face of the rod 10 are gradually increased in the rotatable direction of the flange member 13 (the clockwise direction in Fig. 6). A circular groove 30, which is in contact with the outer faces of the spherical members 20, 20, is formed in the outer circumferential face of the rod 10 and extended in the circumferential direction.

As shown in Fig. 6, each of the spherical members 20 is urged in the direction opposite to the movable direction of the flange member 13 (i.e., the direction of reducing the distances between the outer circumferential face of the rod 10 and the facing surface 13e of the flange member 13. Namely, the counterclockwise direction in Fig. 6), by a spring 36, which acts as a second urging member, whose one end contacts the spherical member and whose the other end is held by the step section 13f of an inner circumferential wall of the flange member 13.

As shown in Fig. 6, three combinations of the spherical member and the spring 36 are arranged in the circumferential direction of the rod 10 with angular separations of 120° .

With the above described structure, the rod 10 can freely rotate, in the clockwise direction in Fig. 6, with respect to the flange member 13, but the spherical members 20 are tightly clamped between the rod 10 and the flange member 13 when the rod is rotated in the counterclockwise direction because the distances between the rod 10 and the facing surface 13e of the flange member 13, with which the spherical members 20 are in contact, are gradually reduced in the counterclockwise direction, so that the clearances between the rod 10 and the flange member 13 are closed or eliminated, the rotation in the counterclockwise direction is prohibited by a frictional force generated by the spherical members 20, etc. and the rotation in the counterclockwise direction is prohibited (as check means).

As shown in Fig. 5, the releasing member 14 is formed into a flange-shape and coaxially pierced through the rod 10, situated next to the flange member 13 in the axial direction of the rod 10 and capable of independently and relatively rotating with respect to the rod 10. One end of the releasing member 14 is projected from the main body 12 so that a user can rotate the releasing member 14.

A cap 22 for closing a hollow part 14c of the releasing member 14 is provided on one side of the releasing member 14, which is the opposite side to the flange member 13. A snap ring 24 for retaining the flange member 13, the releasing member 14 and the cap 22 on the rod 10 is fitted on the outer side of the cap 22. The cap 22 and the snap ring 24 are capable of relatively rotating with respect to the rod 10 and/or the releasing member 14, and the relative rotation of the releasing member 14 with respect to the rod 10 is not prohibited.

The flange member 13 and the releasing member 14 are engaged by a concave part 14b, which is formed in the flange member 13 side part of the releasing member 14, and a projected part 13g of the flange member 13, which can be fitted in the concave part 14b. A small play in the circumferential direction is formed between the projected part 13g and the concave part 14b, so they can relatively turn within a prescribed angular range.

The releasing member 14 has press portions 14a, which are extended toward the flange member 13 along the rod 10. As shown in Fig. 6, each of the press portions 14a is provided between the adjacent spherical members 20. When the user rotates the releasing member 14 in the direction of increasing the distances between the outer circumferential face of the rod 10 and the facing surfaces 13e of the flange member 13, i.e., in the clockwise direction in Fig. 5, the press portions 14e can move the spherical members 20 against the urging forces of the springs 36 (as releasing means). The circumferential play between the flange member 13 and the releasing member 14, which are mutually engaged, is designed to allow the press portions 14a to press the spherical members 20. In case that the press portions 14a press the spherical members 20 and the user further rotates the releasing member 14 beyond the prescribed angular range of the play, the releasing member 14 and the flange member 13 are integrally rotated due to the engagement of the projected part 13g and the concave part 14b.

By moving the spherical members 20, by the press portions 14a of the releasing member 14, against the urging forces of the springs 36, no spherical members 20 will be clamped between the rod 10 and the flange member 13 when an external force for rotating the rod 10 in the counterclockwise direction with respect to the flange member 13 is applied to the rod, so that the rotation of the rod 10 in the counterclockwise direction can be allowed, i.e., the rotation of the rod 10 in the counterclockwise direction can be released (functions of the releasing means).

As shown in Fig. 5, the one end 18a of the spiral spring 18 is linearly formed and fitted in a cut portion 10b axially formed in the rod 10 so as to be connected to the rod 10. The other end 18b of the spiral spring 18 is linearly formed and fitted in a groove portion 14d axially formed in the releasing member 14 so as to be connected to the releasing member 14. As described above, the releasing member 14 and the flange member 13 are connected by engaging the projected part 13g with the concave part 14b, so the urging force of the spiral spring 18 can be applied to the flange member 13 and the rod 10.

Next, initial setting of the preload device 8 will be explained.

Firstly, the user rotates the releasing member 14 in the direction of increasing the distances between the outer circumferential face of the rod 10 and the facing surfaces 13e of the flange member 13, i.e., the clockwise direction in Fig. 6. With this operation, the press portions 14a of the releasing member 14 are turned, in the clockwise direction with respect to the flange member 13, within the prescribed range of the play between the projected part 13g and the concave part 14b, so that they can press the spherical members 20. Then, the spherical members 20 are moved, so that the rotation of the rod 10 in the counterclockwise direction with respect to the flange member 13 can be released.

By further rotating the releasing member 14, the flange 13, whose projected part 13g is engaged with the concave part 14b, is rotated together with the releasing member 14, and the rod 10 is also rotated in the direction, which is the same as the rotational direction of the releasing member 14, by the spiral spring 18 connected to the releasing member 14.

By rotating the rod 10, the roller unit 7, whose axial line is displaced from that of the rod 10, is moved upward, so that the roller 7b comes into contact with the guide face 2a of the horizontal support rail 2.

In the state where the roller unit 7 contacts the support rail 2 and the further movement of the rod 10 is prohibited, if the releasing member 14 is further rotated, the spiral spring 18 is wound so that an urging force in the same direction is applied to the rod 10.

If the user stops the rotation of the releasing member 14 and releases the releasing member 14, the wound spiral spring 18 applies the urging force, which rotates the releasing member 14 in the reverse direction (counterclockwise direction), to the releasing member 14. By the urging force, the releasing member 14 is rotated in the counterclockwise direction, so that the press portion 14a is moved away from the spherical member 14. Then, the spherical member 20 is returned to the initial position, at which the spherical member contacts the outer circumferential face of the rod 10 and the facing surface 13e of the flange member 13, by the urging force of the spring 36. With this action, the rotation of the rod 10 in the counterclockwise direction with respect to the flange member 13 can be prohibited (function of the check means).

Further, after the releasing member 14 is turned in the counterclockwise direction within the range of the play, the urging force of the spiral spring 18 in the counterclockwise direction is applied to the flange member 13, which has been engaged with the releasing member 14, via the releasing member 14. However, the reverse rotation of the flange member 13 is prohibited by the ratchet mechanism, so it is not rotated in the reverse direction (function of the check means).

Therefore, the urging force of the spiral spring 18 works as a force for rotating the rod 10 in the normal direction, so that the preload can be applied to the support rail 2 via the roller unit 7.

In the horizontal movement device of the present embodiment, in case that clearances are formed between the guide face 2a of the horizontal support rail 2 and rollers 7b of the roller units 7 by abrasion, etc., the rods 10 and the roller units 7 are rotated by the urging forces of the spiral springs 18, so that the roller units 7 are moved upward (lifted) and close the clearances. On the other hand, in case that an external force pressing the roller units 7 is applied to the horizontal support rail 2 while the horizontal moving body 4 is moved, the spherical members 20 are clamped by the rod 10 and the flange member 13, and the reverse rotation of the rod 10 is prohibited by the frictional force between the rod and the spherical members 20 because the clearances between the rod 10 and the flange member 13 are gradually reduced in the direction opposite to the direction of the urging force applied to the rod 10.

As described above, the clearances between the horizontal support rail 2 and the roller units 7 can be suitably closed by rotating the rods 10, and the rods 10 are not rotated in the reverse direction, therefore even if a great force is applied to the roller units 7 from the horizontal support rail 2 while the horizontal moving body 4 is moved, no clearances will be formed between the horizontal support rail 2 and the roller units 7 and no play is formed. The preloads applied by the spiral springs 18 are enough for rotating the rods 10 so as to close or eliminate the clearances between the horizontal support rail 2 and the rollers 7b, which are formed by abrasion, etc., so the urging forces (i.e., the preloads) need not be great forces retaliating against the maximum force which will be applied to the horizontal moving body 4.

Since the spherical members 20 are always in contact with the rod 10 and the flange member 13 by the spring 36, the reverse rotation of the rod 10 can be rapidly prohibited without forming play when an external force against the urging force of the spiral spring 18 is applied to the rod 10.

Since a plurality of the spherical members 20 (e.g., three spherical members) are provided around the rod 10, forces applied to the spherical members 20, the rod 10 and the flange member 13 are dispersed to a plurality of the spherical members 20. Therefore, by dispersing the forces applied to the spherical members 20, the rod 10 and the flange member 13, their abrasion and clamping with excessive forces can be prevented so that the movement device can be driven stably.

Since the other end 18b of the spiral spring 18 is connected to the flange member 13 with the releasing member 14, the spiral spring 18 can be wound and the urging force of the spiral spring 18 can be applied to the rod 10 by rotating the flange member in the normal direction with the releasing member 14.

By moving the spherical members 20 in the clockwise direction by the press portions 14a of the releasing member 14, the rotation of the rotation body can be released.

Further, the flange member 13 is engaged with the releasing member so as to rotate together with the releasing member 14 when the releasing member 14 is rotated.

By rotating the releasing member in the normal direction, the reverse rotation of the rod 10 can be allowed, and the spiral spring 18 can be wound by further rotating the releasing member 14. The urging force of the spiral spring 18 urges the releasing member 14 to rotate in the counterclockwise direction, so the press portions 14a of the releasing member 14 can be located at waiting positions, at which the press portions do not press the spherical members 20, while the releasing member 14 is not operated.

With the above described structure, the preload devices 8 of the horizontal movement device of the present embodiment have superior operational performance and maintainability.

Note that, in the above described embodiment, the rods 10 of the preload devices 8, which act as the rotation bodies, are directly connected to the roller units 7, which act as the contact bodies, but the present invention is not limited to this structure.

For example, a transmission member may be provided between the rotation body and the contact body so as to indirectly press the contact body via the transmission member.

Effects of the horizontal movement device of the present embodiment, which has the grooves 40 of the horizontal support rail 2 and the peripheral ridges 42 of the rollers 6b and 7b, will be explained.

The edges 40a and 40b of the grooves 40 of the horizontal support rail 2 and the edges 42a and 42b of the peripheral ridges 42 of the rollers 6b and 7b are in contact with each other, but the outer side faces 42c of the peripheral ridges 42 are not in contact with the inner side faces 40c of the grooves 40. Therefore, the horizontal support rail 2 and the rollers 6b and 7b are constructed such that the both edges 40a and 40b of each of the grooves 40 and the both edges 42a and 42b of each of the peripheral ridges 42 are in contact with each other, and that the outer circumferential faces of the rollers 6b and 7b are in contact with the guide faces 2a of the horizontal support rail 2. Unlike the conventional movement device disclosed in Patent Document 1, distances (radiuses) from contact positions in each of the rollers 6b and 7b to a rotational axis thereof are equal, so that slip, which is occurred between the rollers 6b and 7b and the horizontal support rail 2 by circumferential velocity difference, can be prevented, operation resistance can be reduced and abrasion of the rollers 6b and 7b can be restrained. Further, since the both edges 40a, 40b, 42a and 42b of the grooves 40 and the peripheral ridges 42 are in contact with each other, the axial play of the rollers 6b and 7b can be suitably restrained.

Especially, the rollers 6b and 7b are not separated from the horizontal support rail 2 by the check means of the preload device 8, the edges of the grooves 40 never run on the peripheral edges 42 even if the angle θ2 is increased, and the outer side faces 42c of the peripheral edges 42 and the inner side faces 40c of the grooves 40 are not in contact with each other, so that the operation resistance and the abrasion can be restrained.

Since a plurality of the grooves 40 and a plurality of the peripheral ridges are formed, external forces in the axial directions of the rollers 6b and 7b, which are applied to the horizontal support rail 2 and the rollers 6b and 7b, can be dispersed to the edges 40a, 40b, 42a and 42b, so that great forces are not applied to the rollers 6b and 7b and damaging the rollers can be prevented.

Further, the structural relationship between the grooves 40 and the peripheral ridges 42 may be reversed, namely grooves may be formed in the rollers 6b and 7b instead of the grooves 40 of the horizontal support rail 2, and projected lines may be formed in the horizontal support rail 2 instead of the peripheral ridges 42 of the rollers 6b and 7b, the same effects can be obtained in this case too.

In the vertical movement device too, the effects similar to those of the horizontal movement device can be obtained.

By employing the horizontal movement device and the vertical movement device, the transfer apparatus A can appropriately take out resin-molded products with low operation resistance and without play of the chucking section 50.

### INDUSTRIAL APPLICABILITY

The present invention can be applied to not only the movement device for taking out resin-molded products but also many types of movement devices, for example, in which a moving body is moved along a support rails or in which a rail-shaped moving body is guided and moved by a roller unit.

The moving body may be moved on not only the linear support rail but also a curved support rail so as to perform curvilinear motion of the moving body.

## Claims

1. A movement device,
comprising:
a support rail being fixed to a base body;
a moving body being capable of moving along the support rail;
a roller unit having a roller contacting and rolling on a guide face of the support rail; and
a preload device being provided to the moving body, the preload device always pressing the roller unit toward the support rail with a prescribed force,
wherein a groove is formed in the guide face of the support rail and extended in a moving direction of the moving body,
a peripheral ridge, which enters the groove and whose height is less than a depth of the groove, is formed in an outer circumferential face of the roller, and
the groove and the peripheral ridge are constructed such that,
both edges of the groove and both edges of the peripheral ridge are in contact with each other, and
an angle formed by the guide face and an inner side face of the groove is set smaller than an angle formed by the guide face and an outer side face of the peripheral edge in the contacting edges of the groove and the peripheral edge so as not to bring the outer side face of the peripheral edge into contact with the inner side face of the groove.

2. A movement device,
comprising:
a support rail being fixed to a base body;
a moving body being capable of moving along the support rail;
a roller unit having a roller contacting and rolling on a guide face of the support rail; and
a preload device being provided to the moving body, the preload device always pressing the roller unit toward the support rail with a prescribed force,
wherein a projected line is formed in the guide face of the support rail and extended in a moving direction of the moving body,
a groove, in which the projected line enters and whose depth is more than a height of the groove, is formed in an outer circumferential face of the roller, and
the groove and the projected line are constructed such that,
both edges of the groove and both edges of the projected line are in contact with each other, and
an angle formed by the guide face and an inner side face of the groove is set smaller than an angle formed by the guide face and an outer side face of the projected line in the contacting edges of the groove and the projected line so as not to bring the outer side face of the projected line into contact with the inner side face of the groove.

3. The movement device according to claim 1 or 2,
wherein the preload device comprises:
an urging member urging the roller unit toward the support rail; and
check means for prohibiting the roller unit to move away from the support rail.

4. The movement device according to claim one of claims 1-3,
wherein the support rail is composed of a metal, whose main component is aluminum, and
the roller is composed of plastic.

5. The movement device according to claim one of claims 1-4, wherein the support rail is composed of a metal, whose main component is aluminum, and formed by extrusion molding.

6. A movement device,
comprising:
a roller unit being provided to a base body;
a rail-shaped moving body having a guide face contacting a roller of the roller unit, the rail-shaped moving body being guided by the roller unit; and
a preload device being provided to the base body, the preload device always pressing the roller unit toward the moving body with a prescribed force,
wherein a groove is formed in the guide face of the moving body and extended in a guiding direction of the roller unit,
a peripheral ridge, which enters the groove and whose height is less than a depth of the groove, is formed in an outer circumferential face of the roller, and
the groove and the peripheral ridge are constructed such that,
both edges of the groove and both edges of the peripheral ridge are in contact with each other, and
an angle formed by the guide face and an inner side face of the groove is set smaller than an angle formed by the guide face and an outer side face of the peripheral edge in the contacting edges of the groove and the peripheral edge so as not to bring the outer side face of the peripheral edge into contact with the inner side face of the groove.

7. A movement device,
comprising:
a roller unit being provided to a base body;
a rail-shaped moving body having a guide face contacting a roller of the roller unit, the rail-shaped moving body being guided by the roller unit; and
a preload device being provided to the base body, the preload device always pressing the roller unit toward the moving body with a prescribed force,
wherein a projected line is formed in the guide face of the moving body and extended in a guiding direction of the roller unit,
a groove, in which the projected line enters and whose depth is more than a height of the groove, is formed in an outer circumferential face of the roller, and
the groove and the projected line are constructed such that,
both edges of the groove and both edges of the projected line are in contact with each other, and
an angle formed by the guide face and an inner side face of the groove is set smaller than an angle formed by the guide face and an outer side face of the projected line in the contacting edges of the groove and the projected line so as not to bring the outer side face of the projected line into contact with the inner side face of the groove.

8. The movement device according to claim 6 or 7,
wherein the preload device comprises:
an urging member urging the roller unit toward the moving body; and
check means for prohibiting the roller unit to move away from the moving body.

9. The movement device according to claim one of claims 6-8,
wherein the moving body is composed of a metal, whose main component is aluminum, and
the roller is composed of plastic.

10. The movement device according to claim one of claims 6-9, wherein the moving body is composed of a metal, whose main component is aluminum, and formed by extrusion molding.
